# EUROPEAN PATENT SPECIFICATION

(11) **EP 2 912 713 B1**
(45) Date of publication and mention of the grant of the patent: **26.09.2018**
(21) Application number: 13849358.0
(22) Date of filing: 25.10.2013
(51) Int. Cl.: H01M 4/04, H01M 10/04

(54) **DIFFRACTIVE OPTICAL ELEMENTS AND METHODS FOR PATTERNING THIN FILM ELECTROCHEMICAL DEVICES**
DIFFRAKTIVE OPTISCHE ELEMENTE UND VERFAHREN ZUR STRUKTURIERUNG VON ELEKTROCHEMISCHEN DÜNNSCHICHTVORRICHTUNGEN
ELÉMENTS OPTIQUES À DIFFRACTION ET PROCÉDÉS DE MODÉLISATION DE DISPOSITIFS ÉLECTROCHIMIQUES À FILM MINCE

(30) Priority: 25.10.2012 US 201261718656 P
(43) Date of publication of application: 02.09.2015
(73) Proprietor: Applied Materials, Inc., Santa Clara, CA 95054 (US)
(72) Inventor: SONG, Daoying, San Jose, CA 95124 (US); KWAK, Leo, B., Portland, OR 97229 (US); ADAMS, Bruce, E., Portland, OR 97239 (US); MOFFITT, Theodore, P., Hillsboro, OR 97123 (US)
(74) Representative: Zimmermann & Partner Patentanwälte mbB
(86) International application number: PCT/US2013/066934
(87) International publication number: WO 2014/066832

(56) References cited:
- KR-A- 20100 110 447
- KR-A- 20100 130 450
- US-A1- 2004 265 698
- US-A1- 2009 148 764
- US-A1- 2009 191 663
- US-A1- 2009 208 671
- US-A1- 2009 208 671
- ANDREW F. ZHOU: "UV EXCIMER LASER BEAM HOMOGENIZATION FOR MICROMACHINING APPLICATIONS", OPTICS AND PHOTONICS LETTERS, vol. 04, no. 02, 1 December 2011 (2011-12-01), pages 75-81, XP055277045, ISSN: 1793-5288, DOI: 10.1142/S1793528811000226

## Description

### CROSS-REFERENCE TO RELATED APPLICATIONS

This application claims the benefit of U.S. Provisional Application No. 61/718,656 filed October 25, 2012.

### FIELD OF THE INVENTION

Embodiments of the present invention relate to laser light patterning thin film electrochemical devices, such as thin film batteries and electrochromic devices, using diffractive optical elements and in further embodiments shaped-beams.

### BACKGROUND OF THE INVENTION

Thin film batteries (TFB), with their unsurpassed properties, have been projected to dominate the micro-energy application space. However, there are challenges that still need to be overcome to allow cost effect high volume manufacturing of TFBs. One of the most critical challenges pertains to the current state-of-the-art device patterning technology wherein various physical shadow masks are used during deposition of the device layers, Using shadow masks results in a complex and costly process as influenced by the following disadvantages: (1) a significant capital investment is required to handle (including precision alignment) and clean the masks, especially for large area substrates; (2) the use of shadow masks limits utilization of the substrate area (due to poor alignment capability and stability of alignment during processing) and affects product yield (due primarily to particulate generation); and (3) places constraints on the process (specifically, process limited to low power and low temperature) caused by potential thermal expansion induced alignment issues, Photolithography/etching and laser scribing are currently being tested or proposed to fabricate TFB devices instead of physical shadow mask. However, these processes also have their challenges. For example, the lithography brings in new materials in the photo-resists and associated dry or wet etch and clean chemicals and processes, which can lead to potentially adverse materials interactions at various interfaces, leading to compromise in device functionalities and performances, not to mention significant additional costs. Laser scribing/patterning technology, while it avoids the complexities of the lithography processes and provides significant scalability and cost advantages over both lithography and physical mask based patterning, needs precise galvanometer scanners and the typical Gaussian profile of the laser beam is not well suited for ablating relatively large areas (relative to the beam cross-section), which will add cost to the equipment and process.

Clearly, there is a need for improved approaches to laser direct patterning of electrochemical devices, such as TFBs, EC (Electrochromic) and similar structures and devices, for high throughput and low cost manufacturing.
US 2009/208671 A1 discloses a method of fabricating a battery comprising selecting a battery substrate having cleavage planes, and depositing on the battery substrate, one or more battery component films comprising electrode films that at least partially surround an electrolyte film. Pulsed laser beam bursts are applied to the battery component films at a sufficiently high power level to vaporize portions of the films to form shaped battery features.
Andrew F. Zhou (Optics and photonics letter, vol. 04, no. 2, pages 75-81) describes a UV excimer laser beam delivery system designed with conventional microlens arrays and diffractive diffuse. Ultraflat and ultrasmooth ablated surfaces with sharp edges are obtained on fused silica.
KR 2010 0110447 A discloses a method for patterning a thin film with a laser. A laser absorbing metal layer is formed on one side of a substrate. An ITO layer is formed on the laser absorbing metal layer. A pulse beam laser beam is irradiated on the surface without the laser absorbing metal layer and the ITO layer by passing through a spatial light modulator. A pattern corresponding to the pattern of the spatial light modulator is formed on the laser absorbing metal layer and the ITO layer by separating the laser absorbing metal layer and the ITO layer from the substrate.

### SUMMARY OF THE INVENTION

The objects of the present invention are solved by the features of the independent claims. In general, the invention relates to mask-less laser direct patterning of thin film electrochemical devices, such as thin film batteries (TFBs) and electrochromic (EC) devices, and more specifically to the application of diffractive optical elements for laser patterning of thin film electrochemical devices. The present invention may include laser direct patterning with the use of diffractive optical elements for, among others: die patterning of thin film electrochemical devices after all active layers have been deposited; selective ablation of cathode/anode material from corresponding current collectors; selective ablation of electrolyte material from current collectors; and selective ablation of protective coating material from current collectors, including permeation protection coatings. Diffractive optical elements may be combined with traditional laser scribing equipment for the laser patterning according to the present invention. Many different thin film electrochemical device integration schemes can be developed based on diffractive optical elements according to the present invention, some of the schemes enabling the high throughput and low cost desired in volume production of electrochemical devices. For example, the present invention allows all blanket deposition of device layers, followed by laser device patterning with a diffractive optical element, eliminating some of the complexities and costs of using shadow masks and eliminating some of the issues and limitations associated with small Gaussian beam based direct patterning.

According to aspects of the present invention, a method of fabricating an electrochemical device may comprise: depositing device layers, including electrodes and corresponding current collectors, and an electrolyte layer, on a substrate; and directly patterning at least one of said device layers by a laser light pattern generated by a beam from a laser incident on a diffractive optical element, the laser light pattern directly patterning at least an entire die in a single laser shot, where a shot is defined herein as the number of laser pulses required to ablate the full depth/thickness of the at least one device layer (front-side patterning) or to delaminate the at least one device layer (back-side patterning). (Note that the laser light pattern due to each single laser pulse covers the entire die.) Furthermore, in embodiments the laser light pattern may directly pattern at least an entire die in a single laser pulse. Yet furthermore, a patterning assistance layer may be deposited between device layers or between the substrate and a device layer, wherein the die patterning assistance layer includes a layer of material for achieving thermal stress mismatch between the die patterning assistance layer and at least one of the immediately adjacent device layers, Furthermore, light and heat blocking layers may be integrated into the device stack to improve the ability to ablate a specific layer or layers.

According to further aspects of the present invention, a method of fabricating an electrochemical device may comprise: depositing device layers, including electrodes and corresponding current collectors, and an electrolyte layer, on a substrate; and directly patterning at least one of said device layers by a shaped-beam generated by a beam from a laser incident on an optical element, said shaped-beam being moved along a raster direction across the working surface of said electrochemical device during said directly patterning, wherein the beam has a top-hat energy profile along a first direction parallel to the raster direction. Furthermore, the beam may have a top-hat energy profile in a second direction perpendicular to the raster direction and parallel to the working surface. Yet furthermore, the beam may have a rectangular shape.

According to yet further aspects of the present invention, a tool for fabricating electrochemical devices, may comprise: a first system for depositing device layers, including electrodes and corresponding current collectors, and an electrolyte layer, on a substrate; and a second system including a laser, a substrate stage, and a diffractive optical element, said second system being configured for directly patterning at least one of said device layers by a laser light pattern generated by a beam from said laser incident on said diffractive optical element, the laser light pattern directly patterning at least an entire die in a single laser shot.

According to further aspects of the present invention, a tool for fabricating electrochemical devices, may comprise: a first system for depositing device layers, including electrodes and corresponding current collectors, and an electrolyte layer, on a substrate; and a second system including a laser, a substrate stage, and an optical element, said second system being configured for directly patterning at least one of said device layers by a shaped-beam generated by a beam from said laser incident on said optical element, the laser light pattern directly patterning at least an entire die in a single laser shot.

### BRIEF DESCRIPTION OF THE DRAWINGS

These and other aspects and features of the present invention will become apparent to those ordinarily skilled in the art upon review of the following description of specific embodiments of the.invention in conjunction with the accompanying figures, wherein:
FIG. 1A is a schematic representation of a laser patterning tool configuration including diffractive optics, according to some embodiments of the present invention;
FIG. 1B is a plan view of the diffractive optical element of FIG. 1A.
FIG. 2 is a plan view representation of a thin film battery (TFB) substrate after device die patterning, according to some embodiments of the present invention;
FIG. 3 is a cross-sectional representation of a thin film battery (TFB) with a first configuration, showing laser patterning through the substrate;
FIG. 4 is a cross-sectional representation of a thin film battery (TFB) with a first configuration and an ablation assistance layer, showing a laser beam incident on the TFB structure through the substrate, according to some embodiments of the present invention;
FIG. 5 is a plan view representation of a thin film battery (TFB) substrate after laser patterning of the blanket deposited electrolyte layer, according to some embodiments of the present invention;
FIG. 6 is a cross-sectional representation of a thin film battery (TFB) with a second configuration;
FIGS. 7-14 are plan-view representations of sequential steps in a process flow for fabrication of a TFB, according to some embodiments of the present invention;
FIG. 15 is a schematic of a laser patterning tool with diffractive optics, according to some embodiments of the present invention;
FIG. 16 is a schematic illustration of a thin film deposition cluster tool for electrochemical device fabrication, according to some embodiments of the present invention;
FIG. 17 is a representation of a thin film deposition system with multiple in-line tools for electrochemical device fabrication, according to some embodiments of the present invention;
FIG. 18 is a representation of an in-line deposition tool for electrochemical device fabrication, according to some embodiments of the present invention; and
FIG. 19 is a schematic representation of a laser patterning tool configuration including optics for defining a shaped-beam, which may be moved across the working surface of the electrochemical device to generate the desired pattern, according to some embodiments of the present invention,

### DETAILED DESCRIPTION

Embodiments of the present invention will now be described in detail with reference to the drawings, which are provided as illustrative examples of the invention so as to enable those skilled in the art to practice the invention. Notably, the figures and examples below are not meant to limit the scope of the present invention to a single embodiment, but other embodiments are possible by way of interchange of some or all of the described or illustrated elements. Moreover, where certain elements of the present invention can be partially or fully implemented using known components, only those portions of such known components that are necessary for an understanding of the present invention will be described, and detailed descriptions of other portions of such known components will be omitted so as not to obscure the invention. In the present specification, an embodiment showing a singular component should not be considered limiting; rather, the invention is intended to encompass other embodiments including a plurality of the same component, and vice-versa, unless explicitly stated otherwise herein. Moreover, applicants do not intend for any term in the specification or claims to be ascribed an uncommon or special meaning unless explicitly set forth as such. Further, the present invention encompasses present and future known equivalents to the known components referred to herein by way of illustration,

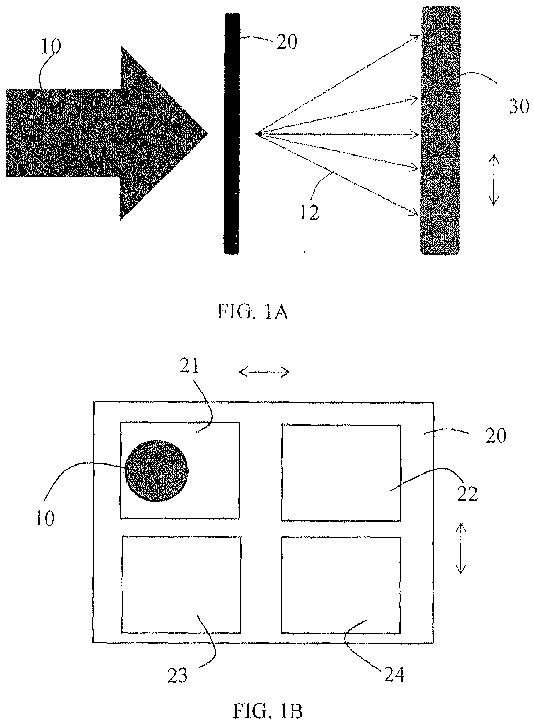

FIGS. 1A and 1B shows a schematic representation of a laser patterning tool configuration with a laser beam 10 incident on a diffractive optical element 20 which generates diffracted beams 12 which are incident on a working surface 30 of an electrochemical device such as a thin film battery (TFB) or electrochromic (EC) device. Furthermore, other optical elements may be used either before or after the diffractive optical element as would be appreciated by those skilled in the art, such as beam expanders, mirrors, refractive lenses, etc. Yet furthermore, if needed, the substrate may be moved as indicated by the arrow (and also in a direction perpendicular to the plane of the page) - for example, if the patterning is done one die at a time, then the substrate is stepped from one die to the next until all dies have been patterned.

Diffractive optical elements are engineered elements that operate by interference and diffraction of a beam to produce a predetermined distribution of light intensity on a working surface. The geometrical patterns and light intensity distribution profile can be individually tailored through design of a diffractive optical element. In order to pattern electrochemical devices, such as TFBs and EC devices, using diffractive optical elements, diffractive optical elements are placed between the light source (generally a laser) and the electrochemical devices, and geometric patterns can be aligned to the devices by properly adjusting locations of the diffractive optical elements. The patterned laser fluence, reaching the working surface, is dimensionally scalable by varying the working distance - the distance between the diffractive optical element and the working surface. Multiple pattern generators may be designed into a single diffractive optical element substrate - for example patterns 21, 22, 23 & 24 in FIG. 1B - and the fluence is controlled by adjusting power from the laser by traditional means. (Note that the arrows in FIG. 1B indicate the directions of movement of the substrate/stage relative to the diffractive optical element 20, as may be needed if a step and expose method is used for patterning of the entire working surface of the substrate. Furthermore, the patterns 21-24 may all be the same, or in embodiments some or all of the patterns may be different.) Note the laser beam 10 is shown in cross-section in FIG. 1B for comparison with the size of the patterns on the diffractive optical element 20 - in this particular example, the spot is smaller than the patterns; the diffractive optics will transform the incoming beam/spot into the full pattern to cover the desired area of the substrate. The ablation area of a single-step patterning depends on the patterning requirements and laser fluence, for example, Typically a laser spot will be of the order of millimeters in diameter, although the spot may readily be expanded or reduced as required to meet the specific patterning needs, both at the diffractive optical element and the working surface of the substrate. Suitable lasers include lasers with wavelengths of 355, 532 and 1064 nm, for example; furthermore, high power (>25 W) and/or high pulse energy lasers may be used. Laser wavelength, power, pulse duration, etc. are chosen to meet the process needs - determined by material type and thickness to be ablated, for example. Furthermore, the material used for the diffractive optical element needs to be compatible with laser wavelength and fluence - for example, when a UV laser is used the material may be fused silica or quartz.

Ablation patterning is a digital process where when the light intensities exceed a threshold an ablation event occurs. To achieve the intensities required for ablation, laser light is delivered in very short pulses in durations no longer than a few nanoseconds and as short as a few hundred femtoseconds. The instantaneous power is typically on the order of gigawatts or higher with radiant fluence of the process field in the range of 0,1-10 J/cm². In contrast, conventional optical lithography delivers optical energy to induce a chemical reaction in a resist material - most resists have an analog response since the extent of the chemical reaction is linearly proportional to the dose of energy delivered. Conventional optical lithography is a high resolution, low energy process with a relatively long exposure time; to obtain high resolution, the light source must be very short wavelength in the UV to deep UV spectrum and use high numerical aperture optics. In addition the cavity of the laser source must support only single mode (low M2) to achieve diffraction limited imaging of the photo-mask. The photo-mask itself limits the fluence delivered in the conventional lithographic process, since the chrome mask ablates at a fluence of 80 mJ/cm² for 20 ns pulses of 532 nm light. This limit is orders of magnitude below the ablation threshold for semiconductor materials such as silicon.

Diffractive element ablative patterning has the following requirement of the laser sources. For a low resolution process, a high mode laser (with high M² - for example, a NdYAG laser with M2 greater than 20) may be used to reduce intensity modulation (speckle) within the formed image by the diffractive optical element. The high mode laser can support higher energies per pulse which is desired for ablating relatively large areas in a single shot. High energy lasers necessarily exhibit low pulse repetition rates (5-50Hz). Using a diffractive optical element, process time may be reduced by ablating full die patterns (all dies on a substrate) in a single laser shot as opposed to raster scanning a beam to scribe a pattern using a high repetition (kHz, MHz or higher) laser; although, some embodiments of the present invention may use a high repetition laser and diffractive optical elements together to pattern a device - for example, when the ablation area is as small as ∼ 200 µm² for a single shot, and the laser energy is evenly distributed in the desired area. More generally, embodiments of the present invention include processes in which the "patterned" area is provided with sufficient energy to achieve uniform, clean ablation and the laser characteristics are parameters that are varied to achieve this desired end result. For example, for a substrate with 10 dies, each die having an area of 6.25 cm² and a laser fluence at the working surface of the substrate for die patterning of 0,1 J/cm2, a laser with pulse energy > 6.25 J can finish all die patterning on the substrate in one laser pulse. Suitable 10J pulse fiber lasers are available from IPG Photonics Corp.

The diffractive optical element may be an engineered projection hologram, making use of either phase or amplitude modulation across the element. An exemplary design specification for the diffractive optical element is a specification determined by two key factors: the specifics of the incident laser field (beam diameter, divergence angle, fluence and angle of beam incidence) and the desired pattern to be formed on the substrate. A limit would be placed on the magnitude of second order pattern brightness relative to the first order pattern and the un-diffracted illumination beam. The differential brightness would determine the process window tolerance around the ablation threshold. The diffractive optical element may be fabricated by wafer-based lithography methods in conjunction with precision glass etching on the surface of an optically transparent substrate, In one embodiment, the diffractive optical element may be a phase shift mask which provides multiple beam paths (via multiple lens thicknesses), the desired pattern being formed by interference of the phase shifted beams. In another embodiment, the diffractive optical element may be a phase shift mask in which the optical density of the element is varied (for absorption variation and phase shift). In yet another embodiment, the diffractive optical element may be an amplitude mask with diffractive arrays on the element through which the beams "diffract" and collectively, by interference of individual beams, form the desired ablation pattern.

Diffractive optical elements are very efficient for patterning electrochemical devices such as TFBs, especially for relatively large area patterning, by removing an entire pattern area of a layer or layers in a single or several exposures rather than removing material serially pixel by pixel to create the desired pattern. In contrast to typical spot laser scribing processes, where ablation is based on movement of laser spots and area ablation is realized by multiple laser spot scans across the whole target area, diffractive optical elements distribute laser energy into the whole target area, and ablation of the desired layers/patterns is achieved by the redistribution of laser light by the diffractive optical element to generate the desired pattern and by controlling laser beam power to achieve ablation. Ablation achieved by diffractive optical elements generally produces clean and smooth lines and uniformly ablated areas with relatively high throughputs, which is extremely difficult to achieve by spot laser based scribing technology, Generally, use of a top-hat energy profile will also help create smooth and uniform patterns. According to aspects of the present invention a patterning process includes ablation of entire lines and composites of lines at once, in contrast to the serial processes in which (circular) small spot ablation is used to serially form lines by stitching spots together.

Diffractive optical element based laser patterning can be applied to pattern any one or more of the device layers in an electrochemical device. Note that the thickness of each electrochemical device layer will typically be in the range of 0.1 to 3 microns, although electrode (e.g. cathode) layers in TFBs may be as thick as 30 microns or even 50 microns. (Metallic layers, including transparent conductive oxides, in electrochromic devices generally being on the thinner end of the range so as to be optically transparent, and electrolyte layers for all electrochemical devices generally being on the thicker end of the range.) For example: TFB die patterning from the top side of the substrate/device side; selective patterning protective coating layers from TFB active stack; selective patterning cathode and/or electrolyte layers from current collectors; TFB die patterning from the bottom side of the substrate/device - one can consider forming the die outlines by ablating the "first bottom layer" on the device side, which will "blow away" the upper layers for clean, single-shot (not rastered), areal definition of device patterns. The present invention may enhance all blanket deposition of device layers, followed by laser device patterning, eliminating some of the complexities and costs of using shadow masks. Some more detailed examples follow.

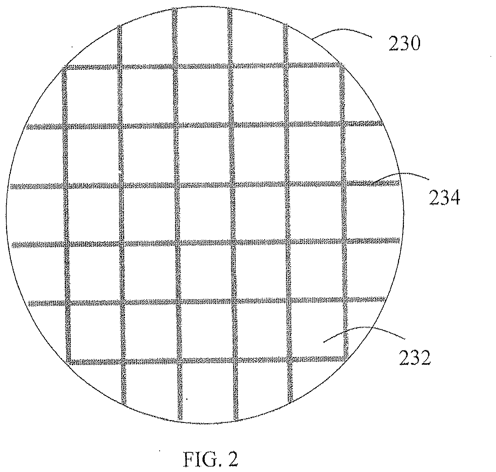

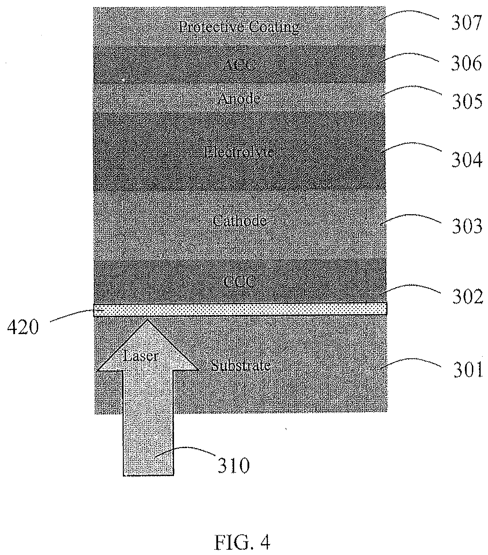

FIG. 2 shows an example of die patterning for a thin film electrochemical device - a substrate 230 has multiple die 232 separated by dicing areas 234. The device die patterning can be performed from the substrate side, which only requires a small fluence. The required ablation fluence is even lower when an additional sacrificial layer is used, as described below with reference to FIG. 4. By using diffractive optical elements, the laser energy can be uniformly distributed into the "alleys" which are cleared of deposited material in preparation for dicing - this not only significantly increases throughput, but also the dicing quality over conventional laser scribing (where conventional laser scribing is using a scanned laser spot with a Gaussian profile, for example). In embodiments, the pattern of FIG. 2 may be generated by a single laser shot, and in further embodiments by a single laser pulse. In other embodiments, a step and expose approach may be used, stitching together adjacent patterns - for example, a single laser shot patterns the scribe alleys for a single die, and the substrate is moved to the next die for patterning the scribe alleys of the next die, etc. until all scribe alleys for all dies have been patterned.

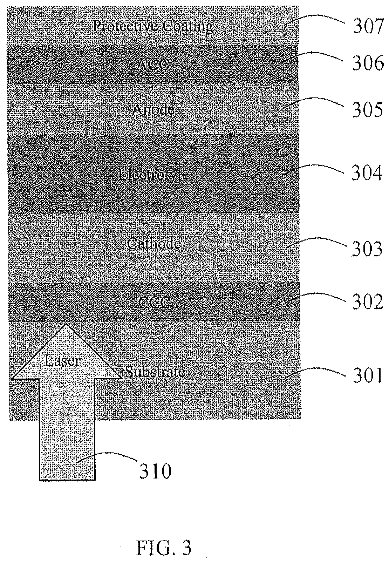

FIG. 3 shows a cross-sectional representation of TFB device die patterning. The TFB stack includes substrate 301, CCC 302, cathode 303, electrolyte 304, anode 305, ACC 306 and protective coating 307. A laser 310 is shown to be incident on the stack through the optically transparent substrate. In prior art TFB device patterning processes, the cathode current collector generally includes a titanium adhesion layer between the CCC and the substrate for good adhesion of the CCC to the substrate. In terms of die isolation by laser ablation processing, there are two different approaches, front and backside ablations, The TFB stack includes several metals, dielectric, and semiconductor layers with different optical and thermal properties. The total thickness of the TFB device is up to tens of microns. This makes front side ablation challenging - potentially requiring different wavelength lasers, high laser fluence and multiple laser ablation steps to remove the full TFB stack. In addition, such complicated laser ablation processes may damage the TFB devices - creating ridges on the ablation trench (due to melting and resolidification in an extended heat-affected zone), and poor electrical isolation between device layers (due to laser smearing during ablation). Laser ablation from the backside (through the substrate) requires less laser fluence and steps to ablate the bottom single layer and then to"blow away" all TFB stacks. In this case, some small heat damage still applies to TFB devices due to: good electrical isolation being very difficult to obtain due to the strong adhesion between the titanium adhesion layer and the substrate; and vaporization/sublimation of the bottom layer of the stack being necessary to "blow away" the upper layers. Whereas, in the TFB device stack of FIG. 4, according to aspects of the present invention, a thin laser ablation assistance layer 420 is inserted between the substrate and the cathode current collector - the laser ablation assistance layer is sacrificial within the ablation areas, Materials that may be used for the ablation assistance layer are amorphous silicon and possibly microcrystalline silicon and LiCoO₂. The thickness of the ablation assistance layer is in the range from 50 Å to 3000 Å. When the laser ablation is from the backside, only a small amount of laser fluence is needed to induce thermal stress between the substrate and the ablation assistance layer and thus delaminate the stack and form the desired pattern. (Some vaporization/sublimation of the ablation assistance layer may also occur, which will assist in "blowing away" the stack above the ablation assistance layer.) The lower laser fluence requirement when using an ablation assistance layer, of about 0.1 to 1.0 J/cm² compared to 1.0 to 10 J/cm² for regular ablation, works well with the large area patterning using the diffractive optical elements according to some embodiments of the present invention. Note that, depending on the layers desired to be ablated, an ablation assistance layer may be incorporated in different places within the stack - it is generally located immediately below the layer(s) required to be removed. Further details of the ablation assistance layer are provided in PCT International Publication No. WO 2013/106082 A2.

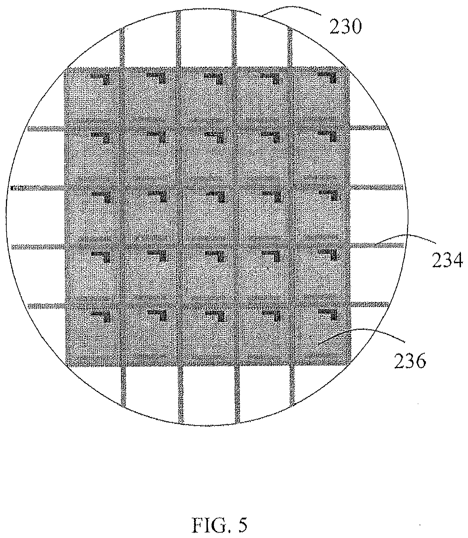

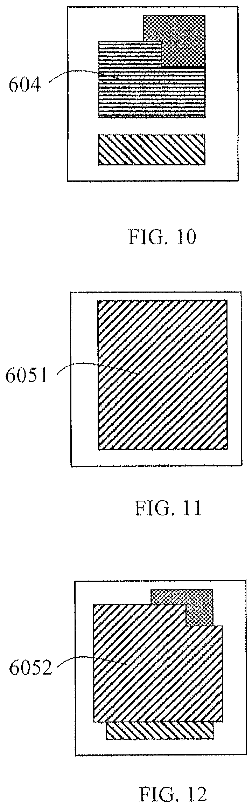

As a further example, FIG. 5 illustrates the result of selective ablation of electrolyte from current collectors - the patterns within each die correspond to that of FIG. 12, described in detail below. Electrolyte is blanket deposited over current collectors, and cathode (for example, LiCoO₂). In order to expose relatively large area current collectors by removing electrolyte, diffractive optical elements are designed to provide the geometrical shapes of the ablation pattern. The laser fluence on the target substrate/devices is controlled by controlling the laser power. The laser dwell time and laser fluence can be used to control the electrolyte ablation to expose current collectors with less damage to the collectors compared with prior art ablation processes due to more uniform laser energy distribution over the working area, especially when using ultrafast lasers with the methods of the present invention. In embodiments patterning may be achieved by a single laser shot, in other embodiments by a single laser pulse or in further embodiments by a step and expose process, all as described above for the pattern of FIG. 2.

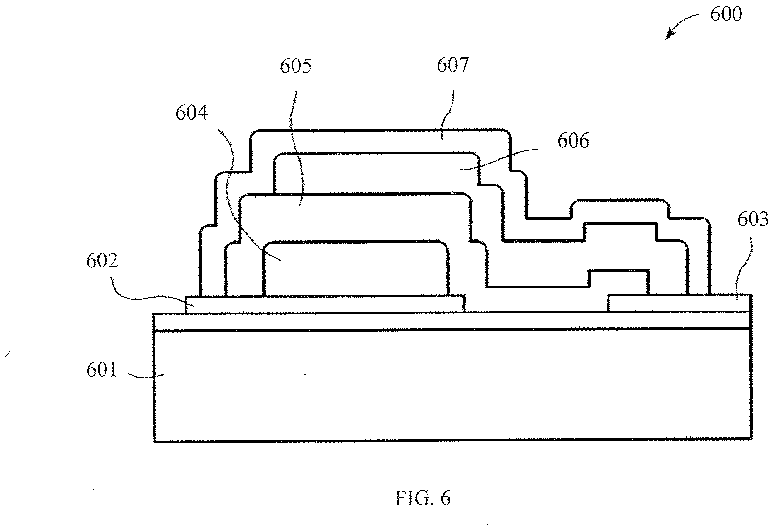

FIG. 6 shows a cross-sectional representation of a typical thin film battery (TFB) structure 600 with anode current collector 603 and cathode current collector 602 formed on a substrate 601, followed by a cathode layer 604, electrolyte layer 605 and anode layer 606; although, the device may be fabricated with the cathode, electrolyte and anode in reverse order. Furthermore, the cathode current collector (CCC) and anode current collector (ACC) may be deposited separately. For example, the CCC may be deposited before the cathode and the ACC may be deposited after the electrolyte. The device may be covered by an encapsulation layer 107 to protect the environmentally sensitive layers from oxidizing agents, See, for example, N. J. Dudney, Materials Science and Engineering B 1 16, (2005) 245-249. Note that the component layers are not drawn to scale in the TFB device shown in FIG. 1.

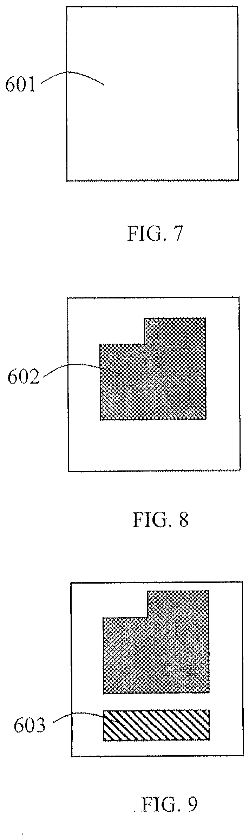

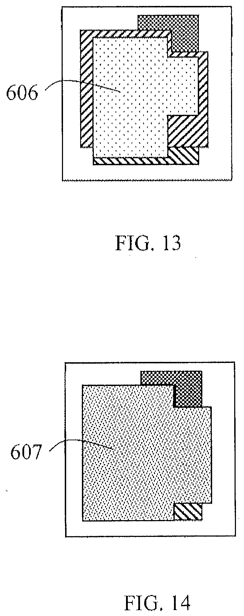

FIGS. 7-14 illustrate one example of a process flow for TFB device fabrication utilizing laser patterning with a diffractive optical element of a blanket electrolyte deposition. This process flow shows only the patterning of a single die, although embodiments of the present invention include simultaneous patterning of multiple dies at once - in a single laser shot. Furthermore, this process flow is an example for a device architecture such as shown in FIG. 6, although other embodiments include patterning of devices with device layers configured as shown in FIGS. 3 & 4. One die of a blank substrate 601 is shown in FIG. 7. FIG. 8 illustrates a patterned CCC layer 602 on the substrate. FIG. 9 shows a patterned ACC layer 603 on the substrate. FIG. 10 illustrates a patterned cathode layer 604 over the CCC layer and substrate. FIG. 11 shows a blanket electrolyte layer 6051 deposited over the structure of FIG. 10. FIG. 12 illustrates the laser patterned electrolyte layer 6052. FIG. 13 illustrates a patterned anode layer 606 deposited over the structure of FIG. 12. FIG. 14 shows a patterned protection layer 607 covering the structure of FIG. 13, except for the contact areas of the ACC and CCC. (Note that exposed edges of the stack may also be protected by coatings of suitable materials, as described in PCT International Publication No. WO 2013/106082 A2.) The patterning of one or more layers may be by a laser ablation process using a diffractive optical element according to some embodiments of the present invention. In some embodiments, all layers apart from the electrolyte may be patterned by shadow masks and the electrolyte layer is patterned by the laser ablation process of the present invention, using a diffractive optical element.

Furthermore, some embodiments of the present invention involve selective removal of specified layers by laser direct patterning using a diffractive optical element and heat and light blocking layers in the device/structure stack immediately below the specified layers which are to be removed by ablation, (Here "below" is being defined by the direction of the laser beam - the laser beam reaches the blocking layers after first passing through the specified layers.) The light blocking layer may be a layer of metal of high melting temperature and sufficient thickness to absorb and/or reflect all the laser light penetrating through the specified layers; furthermore, the light blocking layer may have a mirror-like surface or may have a rough surface. The heat blocking layer may be a layer with thermal diffusivity low enough to ensure a majority of the heat from the laser is contained in the dielectric/semiconductor layers. The thickness of the light and heat blocking layers and the thermal diffusivity of the heat blocking layer may be specified to ensure that the temperature of the underlying layer is kept below its melting point, Tₘ, during the laser ablation process. Furthermore, the thickness of the light and heat blocking layers and the thermal diffusivity of the heat blocking layer may be specified to ensure that the temperature of the underlying layer is kept below the recrystallization temperature during the laser ablation process - typically (Tₘ)/3 for metals, Selectivity may be achieved between metal layers and dielectric or semiconductor layers, or even between different metal layers without affecting/damaging underlying metal layers, providing light and heat blocking layers are incorporated between them. In some embodiments the heat and light blocking layers may be a single layer - a single layer of thermoelectric metal material, for example. In other embodiments the order of the light blocking layer and the heat blocking layer in the stack may be reversed, The light and heat blocking layers may be integrated into the stack while avoiding introducing stress or surface morphology issues into the stack. In some embodiments, for device functionality, both the light blocking and heat blocking layers must be electrically conductive - for example, in a TFB when used immediately above the CCC in the device stack. Furthermore, in some embodiments of the present invention multiple pairs of light and heat blocking layers may be incorporated into a structure or device stack, where each pair may define a different pattern. Yet furthermore, some embodiments of the present invention include using a single pair of light and heat blocking layers to create two different patterns by direct laser patterning from both the top of the stack and through the substrate - patterning through the substrate being used to define separate devices on a substrate and patterning from the top of the stack being used to pattern the stack above the light and heat blocking layers. Different lasers may be required to create the two patterns. Further details of the heat and light blocking layers are provided in PCT International Publication No. WO 2013/022992 A2.

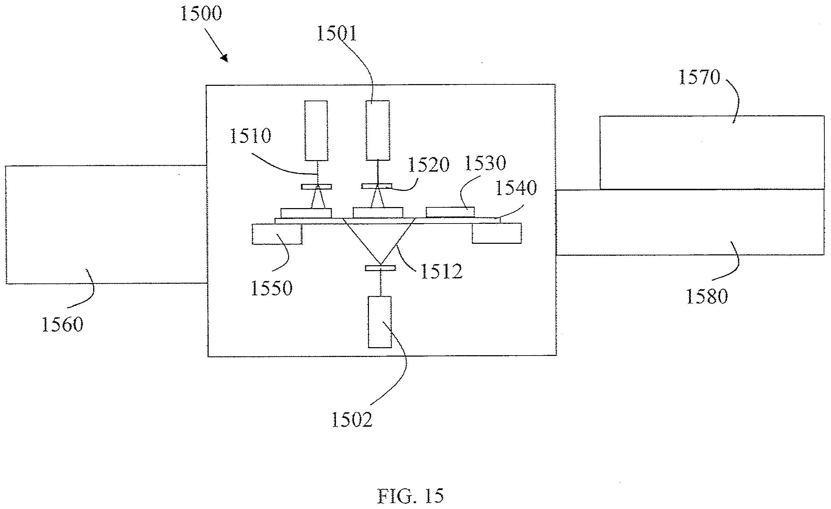

Figure 15 is a schematic of a selective laser patterning tool 1500, according to embodiments of the present invention. Tool 1500 includes lasers 1501 for patterning devices 1530 on a substrate 1540. Furthermore, lasers 1502 for patterning through the substrate 1540 are also shown, although lasers 1501 may be used for patterning through the substrate 1540 if the substrate is turned over. The laser beams 1510 generated by lasers 1501 and 1502 are directed through diffractive optics 1520, generating diffracted beams 1512 for patterning the devices 1530. The diffractive optics 1520 may be different for patterning from top or bottom, or the diffractive optics may be the same, but have multiple different areas which are used to generate the different patterns used for the different patterning steps. A substrate holder/stage 1550 is provided for holding and/or moving the substrate 1540. The stage 1550 may have apertures to accommodate laser patterning through the substrate, Tool 1500 may be configured for substrates to be stationary during laser ablation, or moving - the lasers 1501/1502 may also be fixed or movable; in some embodiments both the substrate and the lasers may be movable in which case the movement is coordinated by a control system. In some embodiments, a step and repeat process is used which may include one or more lasers. A stand-alone version of tool 1500 is shown in FIG. 15, including an SMF and also a glovebox and antechamber. The whole tool may be placed in a dry-room to minimize the complexities of a glove box and to limit the reaction of exposed layers with ambient oxidants. The embodiment shown in FIG. 15 is one example of a tool according to the present invention - many other configurations of the tool are envisaged, for example, the glove box may not be necessary in the case of lithium-free (no separate, deposited Li negative electrode layer reservoir) TFBs, Furthermore, the tool 1500 may be located in a room with a suitable ambient, like a dry-room as used in lithium foil manufacturing.

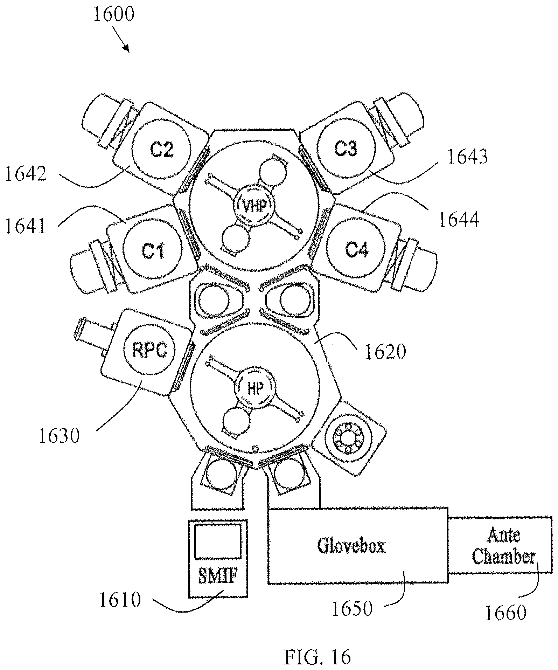

Figure 16 is a schematic illustration of a processing system 1600 for fabricating a TFB device according to some embodiments of the present invention. The processing system 1600 includes a standard mechanical interface (SMIF) 1610 to a cluster tool 1620 equipped with a reactive plasma clean (RPC) chamber 1630 and process chambers C1-C4 (1641, 1642, 1643 & 1644), which may be utilized in the process steps described above. A glovebox 1650 may also be attached to the cluster tool. The glovebox can store substrates in an inert environment (for example, under a noble gas such as He, Ne or Ar), which is useful after alkali metal/alkaline earth metal deposition, An ante chamber 1660 to the glovebox may also be used if needed - the ante chamber is a gas exchange chamber (inert gas to air and vice versa) which allows substrates to be transferred in and out of the glovebox without contaminating the inert environment in the glovebox. (Note that a glovebox can be replaced with a dry room ambient of sufficiently low dew point as such is used by lithium foil manufacturers.) The chambers C1-C4 can be configured for process steps for manufacturing electrochemical devices such as thin film batteries or EC devices which may include, for example: deposition of a stack as described above and selective laser patterning of the stack using diffractive optics. Examples of suitable cluster tool platforms include: Applied Komatzu Technology's (AKT's) display cluster tools, such as the Generation 10 display cluster tools; Applied Materials' New Aristo Platform; and Applied Material's Endura™ and Centura™ platforms for smaller substrates. It is to be understood that while a cluster arrangement has been shown for the processing system 1600, a linear system may be utilized in which the processing chambers are arranged in a line without a transfer chamber so that the substrate continuously moves from one chamber to the next chamber.

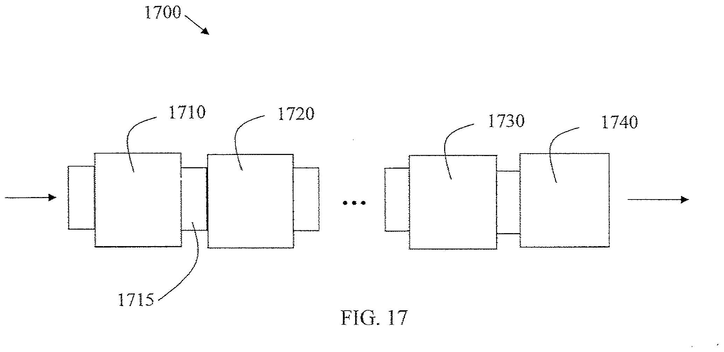

Figure 17 shows a representation of an in-line fabrication system 1700 with multiple in-line tools 1710, 1720, 1730, 1740, etc., according to some embodiments of the present invention, In-line tools may include tools for depositing and patterning all the layers of an electrochemical device, such as a TFB or EC device. Furthermore, the in-line tools may include pre- and post-conditioning chambers. For example, tool 1710 may be a pump down chamber for establishing a vacuum prior to the substrate moving through a vacuum airlock 1715 into a deposition tool 1720. Some or all of the in-line tools may be vacuum tools separated by vacuum airlocks 1715. Note that the order of process tools and specific process tools in the process line will be determined by the particular device fabrication method being used - specific examples of which are provided above. Furthermore, substrates may be moved through the in-line fabrication system oriented either horizontally or vertically. Yet furthermore, selective laser patterning modules using diffractive optics may be configured for substrates to be stationary during laser patterning, or moving.

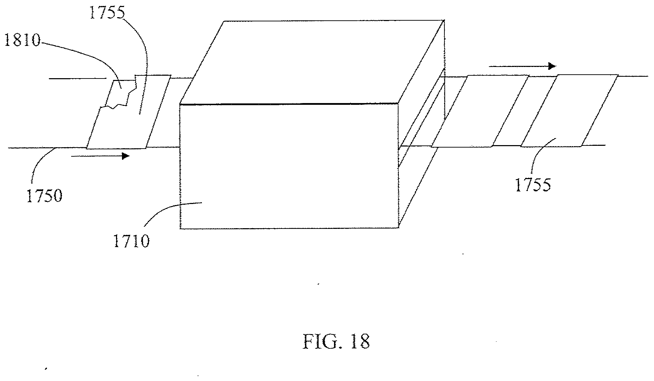

In order to illustrate the movement of a substrate through an in-line fabrication system such as shown in Fig. 17, in Figure 18 a substrate conveyer 1750 is shown with only one in-line tool 1710 in place. A substrate holder 1755 containing a substrate 1810 (the substrate holder is shown partially cut-away so that the substrate can be seen) is mounted on the conveyer 1750, or equivalent device, for moving the holder and substrate through the in-line tool 1710, as indicated, Suitable in-line platforms for processing tool 1710 may be Applied Material's Aton™ and New Aristo™.

An apparatus for forming electrochemical devices, such as thin film batteries, according to embodiments of the present invention may comprise: a first system for blanket depositing on a substrate a stack including an ablation assistance layer (if used), a cathode current collector layer, a cathode layer, an electrolyte layer; an anode layer, an anode current collector layer and a protective coating layer; and a second system for direct laser patterning the stack using diffractive optics, as described above, or patterning by shaped beam laser patterning, as described below. The first systems may be a cluster tool, an in-line tool, stand-alone tools, or a combination of one or more of the aforesaid tools, and the second system may be a stand-alone tool or may be integrated into the first system. Similar apparatus may be used for fabricating other electrochemical devices, such as EC devices, where the first system is configured for depositing the stack required for the specific device, and the ablation assist layer(s) (if used), and the second system is for direct laser patterning the stack using diffractive optics, as described above, or patterning by shaped beam laser patterning, as described below, Furthermore, the apparatus may be configured for a wide range of different process flows such as described herein.

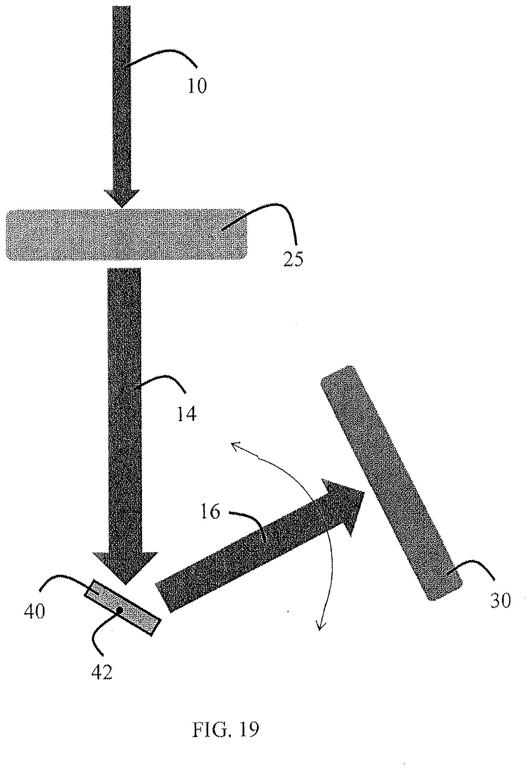

Furthermore, in embodiments, at least one of the electrochemical device layers may be directly patterned by a shaped-beam generated by a laser beam incident on an optical element, where the optical element may include, among others, refractive lenses and apertures. The shaped-beam may be moved across the working surface of the electrochemical device during said directly patterning - for example, the shaped-beam may be rastered. FIG. 19 shows a schematic representation of an example of a shaped-beam laser patterning tool, including a laser beam 10, optical element 25, shaped-beam 14, and scanning/rastering mirror 40 which rotates about an axis 42 to move beam 16 across the working surface of the substrate 30 as indicated by the arrow. For a rastered shaped-beam a laser may be used which operates at a pulse repetition rate as high as 1MHz. The shaped-beam may have a top-hat energy profile along a first direction parallel to the raster direction; the beam energy profile in a second direction perpendicular to the raster direction and parallel to the working surface of the electrochemical device may be Gaussian. Furthermore, in embodiments the shaped-beam may have a top-hat energy profile in the second direction perpendicular to the raster direction and parallel to the working surface of the electrochemical device. Yet furthermore, the shaped-beam may have a rectangular shape, for example, which may further have a high aspect ratio of length to width - in embodiments greater than 5 and in further embodiments greater than 10. The shaped-beam may be used to pattern the different layers of an electrochemical device as describe above for the method utilizing the diffractive optical element, except the shaped-beam is scanned/rastered across the working surface - for example, the shaped-beam may be utilized for ablation of portions of device layers, for selective ablation of portions of device layers, for device layer removal using a patterning assistance layer, etc., and the shaped-beam may be incident on the electrochemical device either directly or through a transparent substrate.

Furthermore, in embodiments, shaped-beam exposures, as described above, may be combined with patterning using diffractive optical elements, as described above, in order to pattern some or all of the device layers of an electrochemical device.

It is noted that a TFB die may range in area between about a millimeter by a millimeter to about 5 inches by 5 inches, with a typical size being about one inch by one inch. A TFB substrate includes multiple die and may typically have longer side dimensions of about: 200 mm by 300 mm for a silicon substrate; 150 mm by 150 mm for a mica substrate; and much larger sizes (restricted by process tools) for glass, polymer and metallic substrates. An EC device die may vary in size greatly depending on the application of the device - for example rear view mirrors may typically have die areas of about 2 inches by 4 or 5 inches, EC display dies may be much smaller, and EC windows may get very large and be small in number per substrate. Substrates for EC devices may vary widely in size and may be as large as a Gen 10 substrate - roughly 3 meters by 3 meters; for smaller EC devices there will typically be many dies per substrate, but for larger devices such as windows there will be relatively few devices per substrate, even down to a single device per substrate.

Although the present invention has been particularly described with reference to certain embodiments thereof, it should be readily apparent to those of ordinary skill in the art that changes and modifications in the form and details may be made without departing from the scope of the invention as defined in the appended claims.

## Claims

1. A method of fabricating thin film electrochemical devices, comprising:
depositing device layers including electrodes (303, 305) and corresponding current collectors (302, 306), and an electrolyte layer (304) on a substrate (301); and
directly patterning at least one of said device layers by a laser light pattern generated by a beam (10) from a laser incident on a diffractive optical element (20), said laser light pattern directly patterning at least an entire die in a single laser shot.

2. The method of claim 1, wherein said directly patterning said at least one device layer is laser ablating a portion of said at least one device layer.

3. The method of claim 1, wherein said directly patterning is selective ablation of a portion of one of said electrodes (303, 305) from over the corresponding current collector (302, 306).

4. The method of claim 1, wherein said directly patterning is selective ablation of a portion of said electrolyte (304) layer from over at least one of said corresponding current collectors (302, 306).

5. The method of claim 1, wherein said directly patterning is ablation of portions of all deposited device layers from over scribing alleys on said substrate (301), said scribing alleys defining the individual die.

6. The method of claim 1, further comprising:
depositing a protective coating (307) over said device layers;
wherein said directly patterning is selective ablation of a portion of said protective coating (307) from over said current collectors (302, 306).

7. The method of claim 1, further comprising:
depositing a patterning assistance layer between device layers, wherein said die patterning assistance layer includes a layer of material for achieving thermal stress mismatch between said die patterning assistance layer and at least one of the immediately adjacent device layers;
wherein said directly patterning is heating said patterning assistance layer to induce delamination of the laser light irradiated portion of the device layers over said patterning assistance layer.

8. The method of claim 1, further comprising:
depositing a die patterning assistance layer (420) on said substrate (301) before said depositing device layers, wherein said die patterning assistance layer (420) includes a layer of material for achieving thermal stress mismatch between said die patterning assistance layer (420) and at least one of said substrate (301) and said immediately adjacent device layer;
wherein said directly patterning is heating said die patterning assistance layer (420) to induce delamination of the laser light irradiated portion of the device layers over said patterning assistance layer (420).

9. The method as in claim 1, 7 or 8, wherein the radiant fluence in said laser light pattern at the electrochemical device is in the range of 0.1 to 1.0 Joules per square centimeter.

10. The method as in claim 5 or 8, wherein said substrate is transparent to the laser light and wherein said laser light pattern is incident on said portion through said substrate (301).

11. The method of claim 1, wherein said laser light pattern directly patterns at least an entire die in a single laser pulse.

12. The method of claim 1, wherein said directly patterning is directly patterning of a first of said device layers by a first laser light pattern generated by said beam (10) incident on a first pattern on said diffractive optical element (20) and directly patterning of a second of said device layers by a second laser light pattern generated by said beam (10) incident on a second pattern on said diffractive optical element (20).

13. The method of claim 1, wherein said laser light pattern directly patterns all dies on said substrate (301) in a single laser shot.

14. The method of claim 1, wherein the beam (10) has a top-hat energy profile.

15. A tool for fabricating thin film electrochemical devices, wherein the tool is configured to perform the method of claim 1, the tool comprising:
a first system (1700) for depositing device layers including electrodes and corresponding current collectors, and an electrolyte layer on a substrate; and
a second system (1500) including a laser (1501, 1502), a substrate stage, and a diffractive optical element (1520), said second system being configured for directly patterning at least one of said device layers by a laser light pattern generated by a beam (1510) from said laser (1501, 1502) incident on said diffractive optical element (1520), said laser light pattern directly patterning at least an entire die in a single laser shot.

## Patentansprüche

1. Verfahren zum Herstellen von elektrochemischen Dünnschichtvorrichtungen, umfassend:
Abscheiden von Vorrichtungsschichten, die Elektroden (303, 305) und entsprechende Stromabnehmer (302, 306) umfassen, und einer Elektrolytschicht (304) auf einem Substrat (301); und
direktes Mustern von mindestens einer von den Vorrichtungsschichten durch ein Laserlichtmuster, das durch einen Strahl (10) von einem Lasereinfall auf ein diffraktives optisches Element (20)erzeugt wird, wobei das Laserlichtmuster mindestens eine gesamte Matrize in einem einzelnen Laserimpuls direkt mustert.

2. Verfahren nach Anspruch 1, wobei das direkte Mustern der mindestens einen Vorrichtungsschicht das Laserabtragen eines Abschnitts der mindestens einen Vorrichtungsschicht ist.

3. Verfahren nach Anspruch 1, wobei das direkte Mustern selektives Abtragen eines Abschnitts von einer der Elektroden (303, 305) von über dem entsprechenden Stromabnehmer (302, 306) ist.

4. Verfahren nach Anspruch 1, wobei das direkte Mustern selektives Abtragen eines Abschnitts der Elektrolytschicht (304) von über mindestens einem von den entsprechenden Stromabnehmern (302, 306) ist.

5. Verfahren nach Anspruch 1, wobei das direkte Mustern ein Abtragen von Abschnitten von allen abgeschiedenen Vorrichtungsschichten von über Ritzbahnen auf dem Substrat (301) ist, wobei die Ritzbahnen die individuelle Matrize definieren.

6. Verfahren nach Anspruch 1, ferner umfassend:
Abscheiden einer Schutzbeschichtung (307) über den Vorrichtungsschichten;
wobei das direkte Mustern ein selektives Abtragen eines Abschnitts der Schutzbeschichtung (307) von über den Stromabnehmern (302, 306) ist.

7. Verfahren nach Anspruch 1, ferner umfassend:
Abscheiden einer Musterungshilfsschicht zwischen Vorrichtungsschichten, wobei die Matrizen-Musterungshilfsschicht eine Materialschicht zum Erreichen von thermischer Belastungsdiskrepanzen zwischen der Matrizen-Musterungshilfsschicht und mindestens einer von den unmittelbar angrenzenden Vorrichtungsschichten umfasst;
wobei das direkte Mustern das Erwärmen der Musterungshilfsschicht ist, um eine Delaminierung des durch Laserlicht bestrahlten Abschnitts der Vorrichtungsschichten über der Musterungshilfsschicht ist.

8. Verfahren nach Anspruch 1, ferner umfassend:
Abscheiden einer Matrizen-Musterungshilfsschicht (420) auf dem Substrat (301) vor dem Abscheiden von Vorrichtungsschichten, wobei die Matrizen-Musterungshilfsschicht (420) eine Materialschicht zum Erreichen von thermischer Belastungsdiskrepanzen zwischen der Die-Musterungshilfsschicht (420) und
mindestens einem von dem Substrat (301) und der unmittelbar angrenzenden Vorrichtungsschicht umfasst;
wobei das direkte Mustern das Erwärmen der Die-Musterungshilfsschicht (420) ist, um eine Delaminierung des durch das Laserlicht bestrahlten Abschnitts der Vorrichtungsschichten über der Musterungshilfsschicht (420) zu induzieren.

9. Verfahren nach Anspruch 1, 7 oder 8, wobei die Energiefluenz in dem Laserlichtmuster an der elektrochemischen Vorrichtung im Bereich von 0,1 bis pro 1,0 Joule pro Quadratzentimeter beträgt.

10. Verfahren nach Anspruch 5 oder 8, wobei das Substrat für das Laserlicht transparent ist, und wobei das Laserlichtmuster auf den Abschnitt durch das Substrat (301) einfällt.

11. Verfahren nach Anspruch 1, wobei das Laserlichtmuster direkt mindestens eine gesamte Matrize in einem einzelnen Laserimpuls mustert.

12. Verfahren nach Anspruch 1, wobei das direkte Mustern das direkte Mustern von einer ersten von den Vorrichtungsschichten durch ein erstes Laserlichtmuster, das durch den Strahl (10) erzeugt wird, der auf eine erste Struktur auf dem diffraktiven optischen Element (20) einfällt, und das direkte Mustern von einer zweiten von den Vorrichtungsschichten durch ein zweites Laserlichtmuster, das durch den Strahl (10) erzeugt wird, der auf eine zweite Struktur auf dem diffraktiven optischen Element (20) einfällt, ist.

13. Verfahren nach Anspruch 1, wobei das Laserlichtmuster direkt alle Matrizen auf dem Substrat (301) in einem einzelnen Laserimpuls mustert.

14. Verfahren nach Anspruch 1, wobei der Strahl (10) ein zylinderförmiges Energieprofil aufweist.

15. Werkzeug zum Herstellen von elektrochemischen Dünnschichtvorrichtungen, wobei das Werkzeug konfiguriert ist, das Verfahren nach Anspruch 1 auszuführen, wobei das Werkzeug umfasst:
ein erstes System (1700) zum Abscheiden von Vorrichtungsschichten, die Elektroden und entsprechende Stromabnehmer umfassen, und einer Elektrolytschicht auf einem Substrat; und
ein zweites System (1500), das einen Laser (1501, 1502), einen Substrattisch und ein diffraktives optisches Element (1520) umfasst, wobei das zweite System konfiguriert ist, mindestens eine von den Vorrichtungsschichten durch ein Laserlichtmuster direkt zu Mustern, das durch einen Strahl (1510) von dem Laser (1501, 1502) erzeugt wird, der auf das diffraktive optische Element (1520) einfällt, wobei das Laserlichtmuster mindestens eine gesamte Matrize in einem einzelnen Laserimpuls mustert.

## Revendications

1. Procédé de fabrication de dispositifs électrochimiques à couche mince, comprenant :
le dépôt de couches de dispositif incluant des électrodes (303, 305) et des collecteurs de courant correspondants (302, 306), et le dépôt d'une couche d'électrolyte (304) sur un substrat (301) ; et
la structuration directe d'au moins une desdites couches de dispositif au moyen d'un motif de lumière laser généré par un faisceau (10) à partir d'un laser incident sur un élément optique de diffraction (20), ledit motif de lumière laser effectuant la structuration directe d'au moins une matrice entière en un seul tir de laser.

2. Procédé selon la revendication 1, dans lequel ladite structuration directe de ladite au moins une couche de dispositif correspond à l'ablation au laser d'une partie de ladite au moins une couche de dispositif.

3. Procédé selon la revendication 1, dans lequel ladite structuration directe correspond à une ablation sélective d'une partie d'une desdites électrodes (303, 305) depuis le collecteur de courant correspondant (302, 306).

4. Procédé selon la revendication 1, dans lequel ladite structuration directe correspond à une ablation sélective d'une partie de ladite couche d'électrolyte (304) depuis au moins un desdits collecteurs de courant correspondants (302, 306).

5. Procédé selon la revendication 1, dans lequel ladite structuration directe correspond à une ablation de parties de toutes les couches de dispositif déposées depuis des allées de traçage sur ledit substrat (301), lesdites allées de traçage définissant la matrice individuelle.

6. Procédé selon la revendication 1, comprenant en outre :
le dépôt d'un revêtement protecteur (307) sur lesdites couches de dispositif ;
dans lequel ladite structuration directe correspond à une ablation sélective d'une partie dudit revêtement protecteur (307) depuis lesdits collecteurs de courant (302, 306).

7. Procédé selon la revendication 1, comprenant en outre :
le dépôt d'une couche d'assistance de structuration entre les couches de dispositif, dans lequel ladite couche d'assistance de structuration de matrice comprend une couche de matériau permettant d'obtenir une disparité de contrainte thermique entre ladite couche d'assistance de structuration de matrice et au moins une des couches de dispositif immédiatement adjacente ;
dans lequel ladite structuration directe correspond au chauffage de ladite couche d'assistance de structuration afin d'induire la délamination de la partie irradiée par une lumière laser des couches de dispositif sur ladite couche d'assistance de structuration.

8. Procédé selon la revendication 1, comprenant en outre :
le dépôt d'une couche d'assistance de structuration de matrice (420) sur ledit substrat (301) avant ledit dépôt des couches de dispositif, sachant que ladite couche d'assistance de structuration de matrice (420) comprend une couche de matériau permettant d'obtenir une disparité de contrainte thermique entre ladite couche d'assistance de structuration de matrice (420) et au moins un parmi ledit substrat (301) et ladite couche de dispositif immédiatement adjacente ;
dans lequel ladite structuration directe correspond au chauffage de ladite couche d'assistance de structuration matrice (420) afin d'induire une délamination de la partie irradiée par une lumière laser des couches de dispositif sur ladite couche d'assistance de structuration (420).

9. Procédé selon la revendication 1, 7 ou 8, dans lequel une fluence de rayonnement dans ledit motif de lumière laser au niveau du dispositif électrochimique se trouve dans la plage comprise entre 0,1 et 1,0 Joules par centimètre carré.

10. Procédé selon la revendication 5 ou 8, dans lequel ledit substrat est transparent à la lumière laser et dans lequel ledit motif de lumière laser est incident sur ladite partie à travers ledit substrat (301).

11. Procédé selon la revendication 1, dans lequel ledit motif de lumière laser structure directement au moins une entière matrice en une seule impulsion de laser.

12. Procédé selon la revendication 1, dans lequel ladite structuration directe correspond à une structuration directe d'une première desdites couches de dispositif par un premier motif de lumière laser généré par ledit faisceau (10) incident sur un premier motif dudit élément optique de diffraction (20) et une structuration directe d'une seconde desdites couches de dispositif par un deuxième motif de lumière laser généré par ledit faisceau (10) incident sur un deuxième motif sur ledit élément optique de diffraction (20) .

13. Procédé selon la revendication 1, dans lequel ledit motif de lumière laser structure directement toutes les matrices sur ledit substrat (301) en un seul tir de laser.

14. Procédé selon la revendication 1, dans lequel le faisceau (10) présente un profil énergétique haut de gamme.

15. Outil destiné à la fabrication de dispositifs électrochimiques à couche mince, dans lequel l'outil est configuré pour réaliser le procédé de la revendication 1, l'outil comprenant :
un premier système (1700) de dépôt de couches de dispositif incluant des électrodes et des collecteurs de courant correspondants, et de dépôt d'une couche d'électrolyte sur un substrat ; et
un second système (1500) comprenant un laser (1501, 1502), un étage de substrat et un élément optique de diffraction (1520), ledit second système étant configuré pour réaliser une structuration directe d'au moins une desdites couches de dispositif par un motif de lumière laser généré par un faisceau (1510) à partir dudit laser (1501, 1502) incident sur ledit élément optique de diffraction (1520), ledit motif de lumière laser effectuant la structuration directe d'au moins une entière matrice en un seul tir de laser.
